# FASCICULE DE BREVET EUROPEEN

(11) **EP 2 017 095 B1**
(45) Date de publication et mention de la délivrance du brevet: **12.05.2010**
(21) Numéro de dépôt: 08160021.5
(22) Date de dépôt: 09.07.2008
(51) Int. Cl.: B60C 23/04

(54) **Pneumatique muni d'un dispositif thermoélectrique**
Gummireifen, der mit einer thermoelektrischen Vorrichtung ausgestattet ist
Tyre fitted with a thermoelectric device

(30) Priorité: 18.07.2007 FR 0756580
(43) Date de publication de la demande: 21.01.2009
(73) Titulaire: Société de Technologie MICHELIN, 63000 Clermont-Ferrand (FR); MICHELIN Recherche et Technique S.A., 1763 Granges-Paccot (CH)
(72) Inventeur: Collonge, Olivier, 38190, VILLARD-BONNOT (FR); Bertrand, David, 25000, BESANCON (FR); Spetler, Frédéric, 63190, LEZOUX (FR); Salvi, Charles, 38000, GRENOBLE (FR)
(74) Mandataire: Dequire, Philippe Jean-Marie Denis

(56) Documents cités:
- JP-A- 2006 023 084
- JP-A- 2006 175 914
- US-A1- 2005 248 447

## Description

L'invention concerne le domaine technique des pneumatiques pour véhicule automobile.

Il est connu de munir une roue ou un pneumatique d'un organe fonctionnel tel que par exemple un capteur de pression, un capteur de température ou un dispositif pour mesurer des déformations de la roue ou du pneumatique.

Généralement, l'organe fonctionnel est actif et doit être alimenté électriquement. Il est connu d'alimenter électriquement l'organe fonctionnel par exemple au moyen d'une pile ou par transmission d'ondes électromagnétiques et conversion de ces ondes en électricité.

Une autre façon connue pour alimenter l'organe consiste à utiliser un générateur thermoélectrique à effet Seebeck. On rappelle qu'un générateur thermoélectrique à effet Seebeck est un dispositif classique qui permet la génération d'un courant électrique à partir d'un gradient de température existant entre deux éléments chaud et froid avec lesquels deux pôles chaud et froid du générateur sont respectivement en contact. Le courant électrique fourni par le générateur est d'autant plus intense que le gradient de température est grand. Toutefois, la génération d'un courant suffisamment intense pour alimenter un organe fonctionnel nécessite des conditions d'utilisation et une implantation du générateur bien particulières car l'effet Seebeck est connu pour fournir un courant de faible intensité.

Le document US-B2-7 209 032 propose d'utiliser un générateur thermoélectrique à effet Seebeck pour alimenter un organe fonctionnel électrique porté par un ensemble d'une roue et d'un pneumatique. Cependant, ce document ne précise pas à quels éléments chaud et froid doit être connecté le générateur thermoélectrique pour obtenir un courant suffisamment intense pour alimenter l'organe fonctionnel.

Le document US2005/0248447 A1 décrit un générateur thermoélectrique monté d'une valve de gonflage pour l'alimentation électrique d'un capteur de pression.

L'invention a notamment pour but d'identifier des éléments chaud et froid auxquels connecter le générateur thermoélectrique à effet Seebeck pour alimenter efficacement un organe fonctionnel électrique porté par un ensemble d'une roue et d'un pneumatique.

A cet effet, l'invention a pour objet un pneumatique muni d'un générateur thermoélectrique à effet Seebeck pour l'alimentation électrique d'un organe, le générateur comprenant des pôles froid et chaud respectivement en contact avec des éléments froid et chaud, l'élément chaud étant un élément constitutif du pneumatique.

Au cours de sa rotation, le pneumatique se déforme, notamment du fait de son passage dans l'aire de contact avec le sol. En particulier, les flancs du pneumatique subissent des flexions répétées. Ces déformations provoquent un échauffement important du pneumatique.

L'invention propose donc d'utiliser un élément faisant partie du pneumatique, échauffé par sa rotation, comme élément chaud auquel connecter le pôle chaud du générateur thermoélectrique à effet Seebeck.

Le fait de positionner le générateur sur le pneumatique présente également d'autres avantages.

Tout d'abord, le pneumatique présente une grande surface interne disponible pour supporter le générateur. Or, on sait que pour augmenter l'intensité du courant produit par le générateur thermoélectrique, une solution consiste à disposer plusieurs générateurs en série ce qui requiert un support de grandes dimensions.

En outre, la température du pneumatique est relativement constante au cours de son utilisation, à la différence de la roue qui subit l'influence du disque de frein dont la température est variable. Cela permet donc de produire un courant d'intensité sensiblement constante.

Un pneumatique selon l'invention peut en outre comprendre l'une ou plusieurs des caractéristiques suivantes.
- L'élément chaud fait partie de la gomme intérieure du pneumatique. La gomme intérieure, et notamment la surface de la gomme intérieure en contact avec l'air intérieur au pneumatique, sont facilement accessibles depuis l'intérieur du pneumatique. De manière simple, le générateur thermoélectrique peut donc être rapporté sur cette surface intérieure et mis en contact avec l'élément chaud.
- L'élément chaud est localisé en zone d'épaule du pneumatique. La zone d'épaule du pneumatique, qui relie la bande de roulement du pneumatique avec le flanc, est une zone qui subit une flexion importante lors du passage de la bande de roulement dans l'aire de contact. L'échauffement de cette zone est particulièrement important. Il est donc avantageux de localiser l'élément chaud dans cette zone.
- L'élément chaud est localisé en zone basse du flanc du pneumatique.
- L'élément chaud est localisé en zone de flexion de la zone basse du flanc de pneumatique. La zone basse des flancs du pneumatique subit des flexions importantes qui engendrent un échauffement particulièrement important. Il est donc avantageux de localiser l'élément chaud dans cette zone.
- L'élément froid fait partie du pneumatique.
- L'élément froid fait partie de la gomme intérieure du pneumatique. Lorsque l'élément chaud et l'élément froid font partie de la gomme intérieure du pneumatique, on peut rapporter simplement le générateur thermoélectrique sur la gomme intérieure du pneumatique, par exemple en l'intégrant dans une enveloppe de gomme à coller sur la gomme intérieure du pneumatique.
- L'élément froid comprend l'air intérieur au pneumatique en contact avec le pôle froid. L'air intérieur au pneumatique est généralement à une température bien inférieure à la température du pneumatique, notamment à la température des zones de flexion de la gomme intérieure. Par conséquent, il existe un gradient de température important entre l'air intérieur et la gomme intérieure de pneumatique. Ce gradient de température est avantageusement utilisé pour connecter le générateur thermoélectrique à effet Seebeck.
- Le pneumatique comprend un élément rapporté sur la gomme intérieure, agencé et conformé de manière à chauffer lors de la rotation du pneumatique et à constituer l'élément chaud. Il est possible d'augmenter artificiellement la température de la gomme intérieure du pneumatique en disposant un élément rapporté dont l'unique fonction est de créer des contraintes locales. La présence de ces contraintes locales engendre un point chaud à la surface du pneumatique.
- L'élément rapporté est réalisé en gomme plus dissipative que la gomme intérieure.
- Le pneumatique comporte en outre des moyens de déformation de l'élément rapporté au cours de la rotation du pneumatique.

L'invention sera mieux comprise à la lecture de la description qui va suivre, donnée uniquement à titre d'exemple et faite en se référant aux dessins annexés dans lesquels :
- la figure 1 est un schéma explicatif de l'effet Seebeck ;
- la figure 2 est un schéma d'un générateur thermoélectrique à effet Seebeck destiné à être rapporté sur un pneumatique selon l'invention ;
- la figure 3 est un schéma électrique d'un circuit d'alimentation d'un organe fonctionnel par le générateur thermoélectrique de la figure 2 ;
- la figure 4 est un schéma selon une coupe axiale d'un pneumatique selon un premier mode de réalisation de l'invention sur lequel deux emplacements possibles du générateur thermoélectrique sont représentés ;
- la figure 5 est un schéma selon une coupe axiale d'un pneumatique selon un second mode de réalisation de l'invention ;
- la figure 6 est un schéma selon une coupe axiale d'un pneumatique selon l'invention muni d'éléments rapportés et conformés de manière à chauffer.

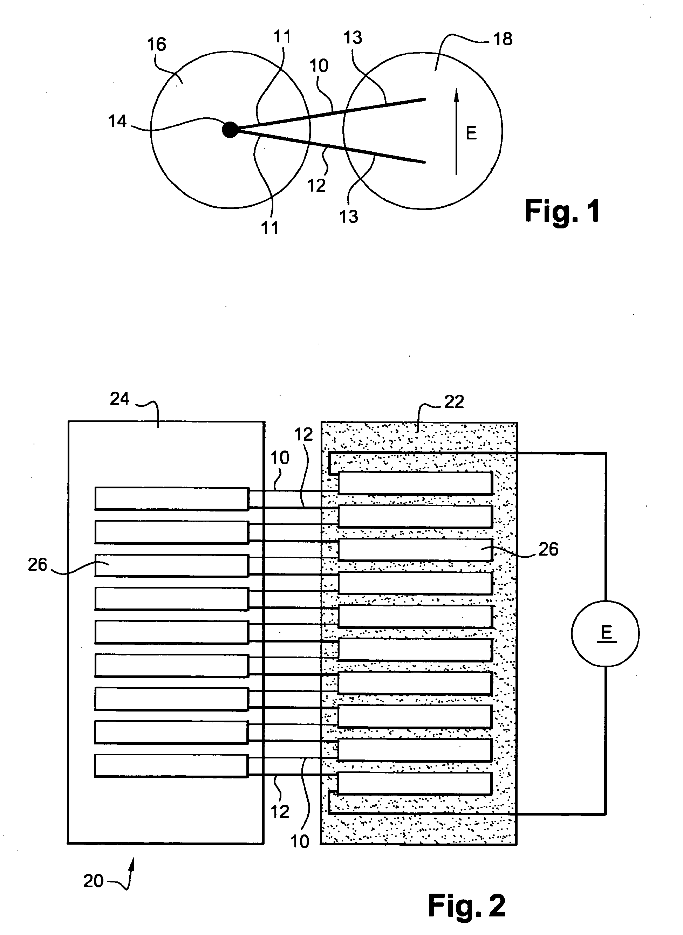

La figure 1 est un schéma explicatif du principe de l'effet Seebeck. L'effet Seebeck, ou thermocouple, utilise les propriétés de certains matériaux qui, sous l'effet d'un gradient de température, produisent une tension électrique.

Sur la figure 1, on a représenté un couple de fils 10 et 12 comprenant chacun des premières extrémités 11 reliées l'une à l'autre par une soudure 14 et des secondes extrémités 13. Les premières extrémités 11 sont en contact avec un élément froid 16 et les secondes extrémités 13 sont en contact avec un élément chaud 18.

Dans cette configuration, l'effet Seebeck produit une tension E entre les secondes extrémités 13 des deux fils de matériau 10 et 12 qui est proportionnelle à la différence de température entre les éléments froid 16 et chaud 18. Le coefficient de proportionnalité α est fonction des matériaux des fils 10 et 12.

A titre d'exemple, ce coefficient α est égal à 70 µV/K lorsque les fils sont réalisés en chromel (CrNi) et en constantan (CuNi), ou est égal à 200 µV/K lorsque les fils sont réalisés en tellure de bismuth (Bi2Te3).

La figure 2 représente un générateur 20 thermoélectrique à effet Seebeck comprenant une pluralité de couples de fils 10 et 12 dont les extrémités sont destinées à être portées à des températures différentes de manière à produire une tension.

Les couples de fils sont montés en série électriquement de sorte que la tension E fournie aux bornes du générateur est sensiblement proportionnelle au nombre de couples en série.

Le générateur 20 comprend deux pôles froid 22 et chaud 24, respectivement destinées à venir en contact avec deux éléments froid 16 et chaud 18, auxquels sont connectées les extrémités des couples de fils. Ces deux pôles 22 et 24 comprennent par exemple des masses de gomme plates.

Pour optimiser la conduction de la température entre les surfaces 22 et 24 et les points de soudure entre les fils 10 et 12, le générateur est muni d'une grille de cuivre 26 qui favorise une répartition de la chaleur.

L'invention propose d'utiliser un générateur thermoélectrique, tel que celui représenté sur la figure 2, pour l'alimentation d'un organe fonctionnel 28, par exemple un capteur de pression.

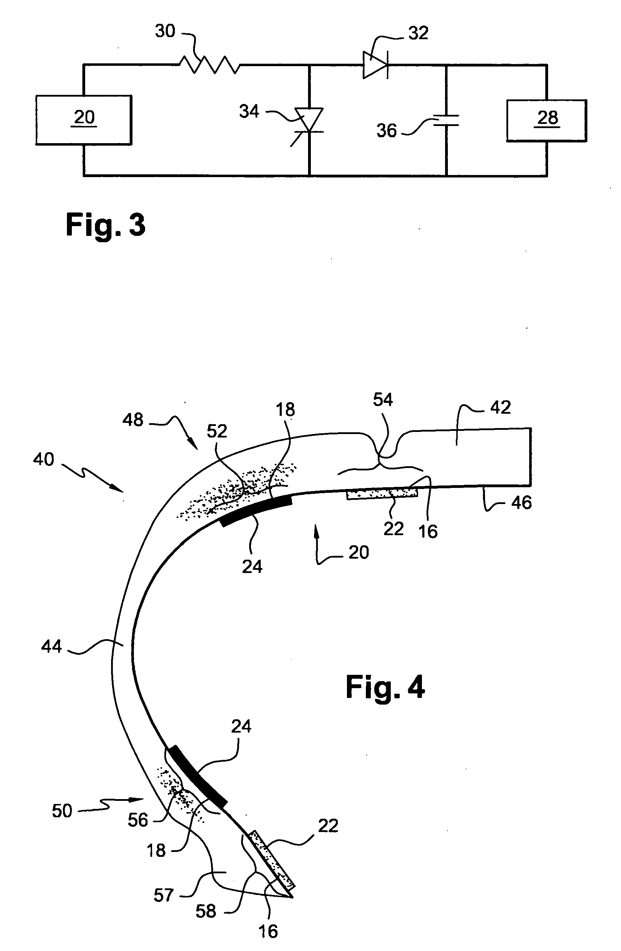

Un exemple de circuit d'alimentation de l'organe 28 est représenté sur la figure 3. Ce circuit d'alimentation comprend une résistance 30, une diode 32, une diode à commande 34 et une capacité 36.

La fonction de la capacité 36 est d'emmagasiner de l'énergie durant les phases où l'organe 28 ne consomme pas d'énergie et pour lui restituer cette énergie dans les phases où cela est nécessaire.

La résistance 30 et les diodes 32 et 34 ont pour fonction de régler la tension disponible aux bornes de la capacité 36 et de régler la fréquence d'alternance de la tension fournie aux bornes de la capacité 36.

On a représenté sur la figure 4 un pneumatique 40 muni du générateur thermoélectrique 20 de la figure 2. Pour des raisons de clarté, seules les pôles 22 et 24 du générateur 20 sont représentés sur la figure 4.

Le pneumatique 40 comprend une bande de roulement 42 située au sommet du pneumatique et deux flancs 44 dont un seul est représenté. La partie du pneumatique 40 en contact avec l'air intérieur au pneumatique comprend la gomme intérieure 46.

La partie du pneumatique 40 qui relie entre eux la bande de roulement 42 du pneumatique et le flanc 44 est appelée zone d'épaule 48. La partie basse du flanc 44 est appelée zone basse 50.

La zone d'épaule 48 et la zone basse 50 sont des zones qui subissent de fortes flexions lors du roulage ce qui provoque un échauffement local du pneumatique représenté sur la figure 4 par des zones foncées.

Selon un premier mode de réalisation de l'invention représenté sur la figure 4, les pôles 22 et 24 du générateur 20 sont en contact avec des éléments froid 16 et chaud 18 qui font tout les deux partie du pneumatique 40, plus précisément de la gomme intérieure 46 du pneumatique.

Deux exemples de disposition possibles du générateur 22 sur le pneumatique 34 sont représentés sur la figure 4.

Selon une première disposition, le pôle chaud 24 du générateur 20 est en contact avec une zone 52 de la gomme intérieure 46 faisant partie de la zone d'épaule 48 du pneumatique 34 et constituant un élément chaud 18.

Le pôle froid 22 du générateur 20 est en contact avec une zone 54 de la gomme intérieure 46 située sous la bande de roulement 42 et constituant un élément froid 16. Les zones 52 et 54 sont choisies de manière à ce que le gradient de température entre ces deux zones soit maximum. Selon cette première disposition, le gradient de température est d'environ 40°C pour un roulage à 100 km/h dans les conditions d'usage moyennes du pneumatique.

Selon une seconde disposition, le pôle chaud 24 du générateur 20 est en contact avec une zone 56 de la gomme intérieure 46 faisant partie de la zone basse 50 du pneumatique 34 et constituant un élément chaud 18.

Le pôle froid 22 du générateur 20 est en contact avec une zone 58 de la gomme intérieure 46 située au niveau du talon 57 du pneumatique et constituant un élément froid 16. Les zones 56 et 58 sont choisies de manière à ce que le gradient de température entre ces deux zones soit maximum. Selon cette seconde disposition, le gradient de température est d'environ 30°C pour des conditions d'usage moyennes et à 100 km/h.

De tels gradients de température sont suffisamment grands pour que le générateur 20 produise une tension permettant d'alimenter l'organe 28. A titre d'exemple, un générateur 20 comprenant dix thermocouples en chromel-constantan de fils 10 et 12, en contact avec deux points chaud et froid séparés de 34°C, fournit une tension de 23mV et une puissance de 165µW.

Ces deux dispositions sont particulièrement intéressantes pour positionner les pôles du générateur car la zone d'épaule 48 et la zone basse 50 du pneumatique sont les deux zones les plus chaudes du pneumatique.

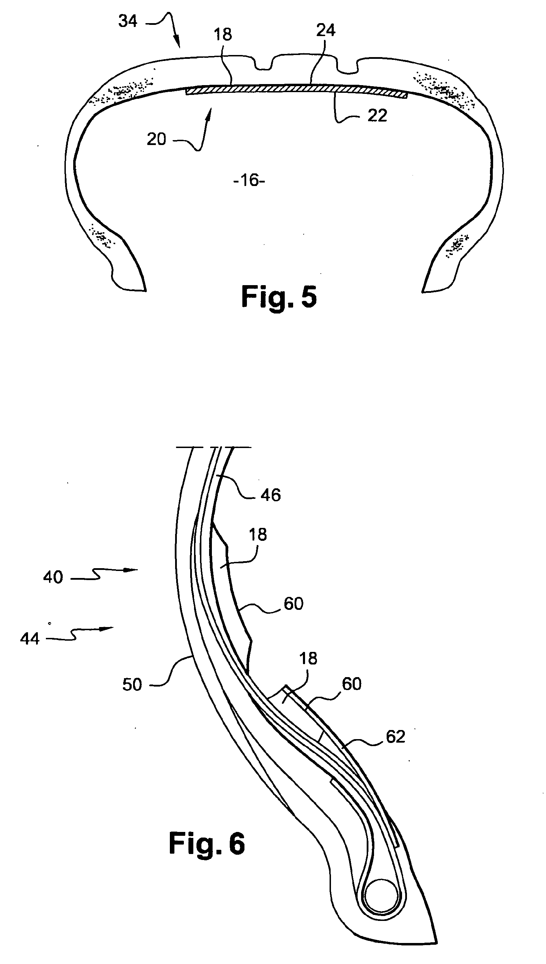

Selon un second mode de réalisation de l'invention représenté sur la figure 5, le pôle chaud 24 du générateur 20 est en contact un élément chaud 18 qui est un élément constitutif de la gomme intérieure 46 du pneumatique 40 et le pôle froid 22 du générateur est en contact avec un élément froid 16 qui est constitué par l'air intérieur au pneumatique 40 en contact avec le pôle froid 22. La température de l'air intérieur au pneumatique est dans des conditions normales de roulage de l'ordre de 30°C ce qui permet d'obtenir un gradient thermique important entre les points chaud et froid.

Selon une variante de l'invention applicable aux deux modes de réalisation précédemment décrits et représentée sur la figure 6, le pneumatique 40 comprend un élément 60 rapporté sur la gomme intérieure 46 du pneumatique 40, agencé et conformé de manière à chauffer lors de la rotation du pneumatique et à constituer l'élément chaud 18. L'élément 60 comprend par exemple une masse de gomme sous la forme d'un pavé ou un anneau de gomme circonférentiel. De préférence, l'élément 60 est réalisé en gomme de formulation spécialement dissipative, à forte hystérèse.

L'élément 60 peut être disposé en plusieurs endroits du pneumatique.

Dans un premier cas non-représenté, l'élément 60 est disposé sous la bande de roulement.

Dans un deuxième cas représenté sur la figure 6, l'élément 60 est disposé dans une zone de flexion de la zone basse 50 du flanc 44 du pneumatique.

Dans un troisième cas représenté sur la figure 6, l'élément 60 est disposé sur le flanc, à proximité du talon 57 du pneumatique et est intercalé entre la gomme intérieure et une lame métallique 62 formant moyens de déformation de l'élément 60, notamment par cisaillement de la masse de gomme. Pour cela, la lame métallique comprend une extrémité liée au talon du pneumatique de manière à ce qu'au cours de la rotation et de la déformation du pneumatique, l'extrémité libre de la lame s'éloigne et se rapproche de la gomme intérieure pour cisailler l'élément 60.

Dans ces trois cas, la température de l'élément 60 est supérieure à la température qu'aurait la gomme intérieure si l'élément 60 était absent. Par conséquent, en augmentant la température de l'élément chaud auquel est connecté le pôle chaud du générateur 20, on augmente le gradient de température entre les éléments chaud et froid ce qui permet d'augmenter la tension produite par le générateur 20.

## Revendications

1. Pneumatique (34) **caractérisé en ce qu'**il est muni d'un générateur (20) thermoélectrique à effet Seebeck pour l'alimentation électrique d'un organe (28), le générateur (20) comprenant des pôles froid (22) et chaud (24) respectivement en contact avec des éléments froid (16) et chaud (18), l'élément chaud (18) faisant partie du pneumatique (34).

2. Pneumatique (34) selon la revendication précédente, dans lequel l'élément chaud (18) fait partie de la gomme intérieure (46) du pneumatique (34).

3. Pneumatique (34) selon l'une quelconque des revendications 1 et 2, dans lequel l'élément chaud (18) est localisé en zone d'épaule (48) du pneumatique (34).

4. Pneumatique (34) selon l'une quelconque des revendications 1 et 2, dans lequel l'élément chaud (18) est localisé en zone basse (50) de flanc (44) du pneumatique (34).

5. Pneumatique (34) selon la revendication 4, dans lequel l'élément chaud (18) est localisé en zone de flexion de la zone basse (50) du flanc (44) du pneumatique (34).

6. Pneumatique (34) selon l'une quelconque des revendications 1 à 5, dans lequel l'élément froid (16) fait partie du pneumatique (34).

7. Pneumatique (34) selon la revendication précédente, dans lequel l'élément froid (16) fait partie de la gomme intérieure (46) du pneumatique (34).

8. Pneumatique (34) selon l'une quelconque des revendications 1 à 5, dans lequel l'élément froid (16) comprend l'air intérieur au pneumatique (34) en contact avec le pôle froid (22).

9. Pneumatique (34) selon l'une quelconque des revendications précédentes, comprenant un élément (60) rapporté sur la gomme intérieure (46) du pneumatique (34), agencé et conformé de manière à chauffer lors de la rotation du pneumatique (34) et à constituer l'élément chaud.

10. Pneumatique (34) selon la revendication précédente, dans lequel l'élément rapporté (60) est réalisé en gomme plus dissipative que la gomme intérieure (46).

11. Pneumatique (34) selon la revendication 9 ou 10, comprenant en outre des moyens (62) de déformation de l'élément rapporté (60) au cours de la rotation du pneumatique (34).

## Claims

1. Tire (34) **characterized in that** it is provided with a Seebeck effect thermoelectric generator (20) for electrically powering a member (28), the generator (20) comprising a cold pole (22) and a hot pole (24) respectively in contact with a cold element (16) and a hot element (18), the hot element (18) forming part of the tire (34).

2. Tire (34) according to the previous claim, in which the hot element (18) forms a portion of the rubber inner liner (46) of the tire (34).

3. Tire (34) according to any one of claims 1 and 2, in which the hot element (18) is positioned in a shoulder zone (48) of the tire (34).

4. Tire (34) according to any one of claims 1 and 2, in which the hot element (18) is positioned in a bottom zone (50) of the sidewall (44) of the tire (34).

5. Tire (34) according to claim 4, in which the hot element (18) is positioned in a zone of the bottom zone (50) of the sidewall (44) of the tire (34) that is subjected to flexing.

6. Tire (34) according to any one of claims 1 to 5, in which the cold element (16) forms a portion of the tire (34).

7. Tire (34) according to the previous claim, in which the cold element (16) forms a portion of the rubber inner liner (46) of the tire (34).

8. Tire (34) according to any one of claims 1 to 5, in which the cold element (16) comprises the air inside the tire (34) coming into contact with the cold pole (22).

9. Tire (34) according to any one of previous claims, including an element (60) fitted onto the rubber inner liner (46) of the tire (34) and arranged and shaped in such a manner as to heat up during rotation of the tire (34), thereby constituting the hot element.

10. Tire (34) according to the previous claim, in which the fitted element (60) is made of rubber that presents greater dissipation than the rubber inner liner (46).

11. Tire (34) according to claim 9 or 10, further comprising means (62) for deforming the fitted element (60) during rotation of the tire (34).

## Patentansprüche

1. Reifen (34), **dadurch gekennzeichnet, dass** er mit einem thermoelektrischen Generator (20) mit Seebeck-Effekt zur elektrischen Versorgung eines Glieds (28) versehen ist, wobei der Generator (20) einen Kaltpol (22) und einen Heißpol (24) umfasst, die mit einem Kaltelement (16) bzw. Heißelement (18) in Kontakt stehen, wobei das Heißelement (18) einen Teil des Reifens (34) bildet.

2. Reifen (34) nach dem vorhergehenden Anspruch, wobei das Heißelement (18) einen Teil der Innenseele (46) des Reifens (34) bildet.

3. Reifen (34) nach einem der Ansprüche 1 und 2, wobei das Heißelement (18) im Schulterbereich (48) des Reifens (34) positioniert ist.

4. Reifen (34) nach einem der Ansprüche 1 und 2, wobei das Heißelement (18) im Wulstbereich (50) der Seitenwand (44) des Reifens (34) positioniert ist.

5. Reifen (34) nach Anspruch 4, wobei das Heißelement (18) im Walkbereich des Wulstbereichs (50) der Seitenwand (44) des Reifens (34) positioniert ist.

6. Reifen (34) nach einem der Ansprüche 1 bis 5, wobei das Kaltelement (16) einen Teil des Reifens (34) bildet.

7. Reifen (34) nach dem vorhergehenden Anspruch, wobei das Kaltelement (16) einen Teil der Innenseele (46) des Reifens (34) bildet.

8. Reifen (34) nach einem der Ansprüche 1 bis 5, wobei das Kaltelement (16) Luft im Inneren des Reifens (34) in Kontakt mit dem Kaltpol (22) umfasst.

9. Reifen (34) nach einem der vorhergehenden Ansprüche, der ein an der Innenseele (46) des Reifens (34) angefügtes Element (60) umfasst, das dazu angeordnet und konfiguriert ist, sich bei Drehung des Reifens (34) zu erwärmen und das Heißelement zu bilden.

10. Reifen (34) nach dem vorhergehenden Anspruch, wobei das angefügte Element (60) aus einem dissipativeren Kautschuk besteht als die Innenseele (46).

11. Reifen (34) nach Anspruch 9 oder 10, der des Weiteren Mittel (62) zur Verformung des angefügten Elements (60) während der Drehung des Reifens (34) umfasst.
